# FASCICULE DE BREVET EUROPEEN

(11) **EP 3 212 118 B1**
(45) Date de publication et mention de la délivrance du brevet: **14.04.2021**
(21) Numéro de dépôt: 15784060.4
(22) Date de dépôt: 22.10.2015
(51) Int. Cl.: A61C 8/00, A61C 9/00

(54) **ENSEMBLE DE CICATRISATION POUR UNE RESTAURATION DENTAIRE**
WUNDHEILENDE EINHEIT FÜR EINEN ZAHNERSATZ
WOUND-HEALING UNIT FOR A DENTAL RESTORATION

(30) Priorité: 29.10.2014 FR 1460368; 12.11.2014 FR 1460889
(43) Date de publication de la demande: 06.09.2017
(73) Titulaire: Euroteknika, 74700 Sallanches (FR); Stemmer, Armand, 75016 Paris (FR)
(72) Inventeur: STEMMER, Armand, F-75016 Paris (FR); LEGER, Théo, F-74700 Domancy (FR); CALVAT, Benjamin, F-73400 Ugine (FR); LANCIEUX, Cédric, 74120 Megève (FR)
(74) Mandataire: Novaimo
(86) Numéro de dépôt international: PCT/EP2015/074476
(87) Numéro de publication internationale: WO 2016/066516

(56) Documents cités:
- WO-A2-2014/012973
- KR-B1- 101 419 519
- US-A- 5 759 036
- US-A- 5 810 592
- US-A1- 2006 019 219
- US-A1- 2012 035 889
- US-A1- 2013 196 290

## Description

La présente invention se rapporte à un ensemble de cicatrisation comprenant un élément de cicatrisation pour une restauration dentaire et à une méthode de fabrication d'un pilier de restauration dentaire basée sur un tel élément de cicatrisation.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et standard et intégrant parfois des indicateurs et/ou plusieurs composants complémentaires pour permettre la prise en compte de tout ou partie de la géométrie au-dessus de l'implant sans y avoir totalement accès par une prise d'empreinte. Ces méthodes moins traumatisantes présentent alors d'autres inconvénients, de complexité et/ou de moins bonne optimisation de la phase de cicatrisation.

Le document US2013196290 décrit un élément de cicatrisation de forme cylindrique, avec un ou plusieurs méplats servant de marqueur informatif.

Le document KR10141951 9 décrit un capuchon de cicatrisation monté libre en rotation autour d'une embase.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet une restauration la plus adaptée possible à l'anatomie du patient.

Un troisième objet de l'invention est une solution de restauration dentaire la plus universelle possible, adaptée à tout implant et toute restauration.

Un quatrième objet de l'invention est une solution de restauration dentaire la plus simple possible.

A cet effet, l'invention repose sur un ensemble de cicatrisation selon la revendication 1. D'autres réalisations sont définies dans les revendications dépendantes 2-8.

Les parties de la surface émergente destinées respectivement à un positionnement orienté vers l'intérieur et vers l'extérieur de la bouche peuvent présenter une forme différente.

Sa surface terminale et/ou sa surface émergente peut présenter :
- une surface non plane, courbée ; et/ou
- une surface convexe ; et/ou
- une surface sans aspérité ; et/ou
- une surface sans ouverture débouchante (traversante).

L'élément de cicatrisation peut être un capuchon qui comprend une ouverture dans une surface opposée à la surface terminale pour coopérer avec une embase de pilier.

Sa surface terminale ou sa surface émergente peut comprendre un indicateur pour indiquer sa hauteur ou l'élément de cicatrisation peut comprendre une couleur pour indiquer sa hauteur.

L'élément de cicatrisation peut être un pilier de cicatrisation qui comprend un dispositif de connexion avec un implant.

L'invention porte aussi sur un ensemble formé par l'association amovible d'une embase de pilier et d'un capuchon, caractérisé en ce que le capuchon est un élément de cicatrisation tel que décrit précédemment.

L'embase de pilier peut comprendre un dispositif de connexion avec un implant, et la surface terminale ou la surface émergente du capuchon peut comprendre un côté parallèle à une surface plane du dispositif de connexion.

L'invention porte aussi sur une série d'éléments de cicatrisation, caractérisée en ce qu'elle comprend au moins deux éléments de cicatrisation tel que décrit précédemment présentant des formes différentes, ou en ce qu'elle comprend au moins trois éléments de cicatrisation de formes différentes.

L'invention porte aussi sur un procédé de fabrication d'un pilier de restauration dentaire, destiné à être fixé sur un implant dentaire sur une première extrémité et à recevoir une prothèse sur sa seconde extrémité, caractérisé en ce qu'il comprend les étapes suivantes :
- prise d'une empreinte manuelle ou numérique de l'espace buccal comprenant un élément de cicatrisation tel que décrit précédemment fixé sur l'implant ;
- détection automatique du positionnement de l'implant par l'identification de :
- l'axe de l'implant correspondant à un axe de l'élément de cicatrisation identifié par la géométrie de sa surface émergente hors de la gencive ou à partir d'une association à un élément de cicatrisation mémorisé stocké dans une base de données, notamment à partir de sa référence saisie dans une interface homme machine ou de sa reconnaissance automatique par la forme de sa partie émergente ;
- orientation de l'implant à partir de l'orientation de la surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente ;
- hauteur de l'implant par détermination de la hauteur de l'élément de cicatrisation, à partir d'une couleur ou d'un indicateur de sa surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente

L'invention porte également sur un dispositif de restauration dentaire selon la revendication 10.

L'invention est plus précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
Les figures 1 et 2 représentent respectivement des vues en perspective d'une embase de pilier utilisée dans un procédé de restauration selon un mode de réalisation de l'invention.
Les figures 3 et 4 représentent respectivement des vues en perspective d'une phase intermédiaire d'association d'un capuchon sur une embase de pilier dans un procédé de restauration selon le mode de réalisation de l'invention.
Les figures 5 et 6 représentent respectivement des vues en perspective de l'ensemble obtenu après fixation d'un capuchon sur une embase de pilier dans un procédé de restauration selon le mode de réalisation de l'invention.
Les figures 7 et 8 représentent respectivement des mêmes vues en perspective sur lesquelles le capuchon est représenté en transparence pour visualiser l'embase de pilier.
La figure 9 représente les dents inférieures et supérieures en vue de dessus.
La figure 10 représente une vue des dents selon une section justa-gingivale.
La figure 11 représente une section horizontale de la dentition au niveau justa-gingival ainsi que les capuchons correspondants retenus selon le mode de réalisation de l'invention.
Les figures 12a à 12d et 13a à 13d représentent respectivement des vues en perspective de dessus et de dessous d'une série de capuchons selon le mode de réalisation de l'invention.
Les figures 14a à 14d représentent respectivement des vues de côté de la série de capuchons selon le mode de réalisation de l'invention.
Les figures 15a à 15d représentent respectivement des vues de dessus de la série de capuchons selon le mode de réalisation de l'invention.
Les figures 16a à 16d représentent respectivement des vues de dessous de la série de capuchons selon le mode de réalisation de l'invention.
Les figures 17a à 17d et 18a à 18d représentent respectivement des vues en perspective de dessus et de dessous d'une phase intermédiaire d'association de la série de capuchons avec des embases de pilier dans un procédé de restauration selon le mode de réalisation de l'invention.
Les figures 19a à 19d représentent respectivement des vues de côté de la série de capuchons assemblés avec des embases de pilier selon le mode de réalisation de l'invention.
Les figures 20 à 22 représentent des vues en coupe par un plan médian vertical illustrant des étapes du procédé de restauration selon un mode de réalisation de l'invention.
La figure 23 illustre une vue en coupe d'un capuchon selon le mode de réalisation de l'invention disposé sur une embase de pilier fixée dans un implant.
La figure 24 illustre une vue en coupe d'un ensemble de cicatrisation comprenant un capuchon entouré de la gencive et disposé sur une embase de pilier fixée dans un implant selon le mode de réalisation de l'invention.
Les figures 25 et 26 représentent deux vues schématiques d'une gencive en coupe au sein de laquelle est fixé un ensemble de cicatrisation selon le mode de réalisation de l'invention.

Le procédé de restauration selon le mode de réalisation de l'invention comprend donc deux phases, comme explicité précédemment : une première phase dite de cicatrisation durant laquelle un ou plusieurs implant(s) sont intégrés dans la structure osseuse du patient par ostéointégration, et durant laquelle un capuchon de cicatrisation particulier associé à une embase de pilier sont utilisés, comme cela va être détaillé par la suite, puis une seconde phase de restauration en tant que telle, durant laquelle une prothèse définitive est mise en place sur le ou les implants par l'intermédiaire d'un pilier de restauration.

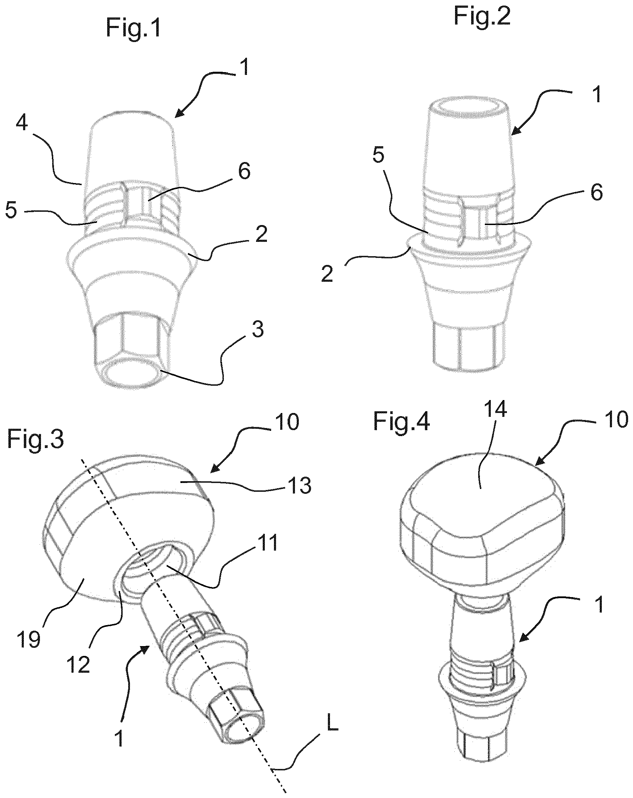

Selon le mode de réalisation de l'invention qui va être décrit, une restauration dentaire utilise, dans la première phase de cicatrisation, un composant intermédiaire que nous appellerons embase de pilier 1, qui est parfois appelé simplement pilier ou T-base ou Esthétibase. L'embase de pilier 1, particulièrement représentée sur les figures 1 à 8, comprend deux parties principales, séparées par une collerette 2. Une première partie comprend un dispositif de connexion 3 avec un implant. Une seconde partie coronaire est destinée à recevoir un capuchon de cicatrisation 10. Pour cela, elle comprend un dispositif de connexion 4 avec un tel capuchon. Selon le mode de réalisation, ce dispositif de connexion 4 comprend un élément de clippage 5 et un élément anti-rotationnel 6, pour empêcher le capuchon de tourner autour de l'axe longitudinal L de l'embase de pilier 1, cet axe longitudinal L étant par ailleurs destiné à un alignement avec l'axe d'un implant. Selon le mode de réalisation, l'élément anti-rotationnel 6 est un ergot. Cet élément anti-rotationnel 6 est de plus aligné avec une surface particulière du dispositif de connexion 3 avec un implant. De plus, selon le mode de réalisation, l'élément de clippage 5 est formé par plusieurs gorges agencées sur la circonférence de l'embase de pilier 1 au voisinage de la collerette 2. De manière avantageuse, l'élément de clippage 5 est tel qu'il permet d'obtenir un clic sonore lors de la fixation par clippage d'un capuchon de cicatrisation 10.

En remarque, l'embase de pilier 1 utilisée est non définitive, participe à la première phase de cicatrisation uniquement, est de préférence retirée lors de la finalisation de la restauration et remplacée par un pilier de restauration définitif (qui peut se présenter sous la forme d'une autre embase). En variante, la même embase de pilier 1 est éventuellement retirée, nettoyée et réutilisée dans la restauration définitive, remplissant alors la seconde fonction de pilier de restauration.

De plus, l'embase de pilier 1 est de préférence universelle, et présente une forme symétrique ou plus précisément quasi symétrique (l'élément anti-rotationnel forme par exemple une exception à la symétrie) autour d'un axe longitudinal L qui forme un axe de révolution. Cet axe L forme donc notamment un axe central de symétrie du dispositif de connexion 3 avec un implant. Avantageusement, ce même axe L forme aussi un axe de symétrie du dispositif de connexion 4 avec un capuchon. L'embase de pilier 1 s'étend donc globalement selon une seule direction, identifiée par un axe longitudinal L unique. Nous pouvons donc plus généralement considérer que l'embase de pilier comprend un axe longitudinal L qui s'étend sur toute sa longueur, de manière apte à un alignement avec l'axe d'un implant 60. Notamment, les deux dispositifs de connexion 3, 4 de l'embase de pilier 1 sont agencés à des niveaux différents autour de ce même axe longitudinal L.

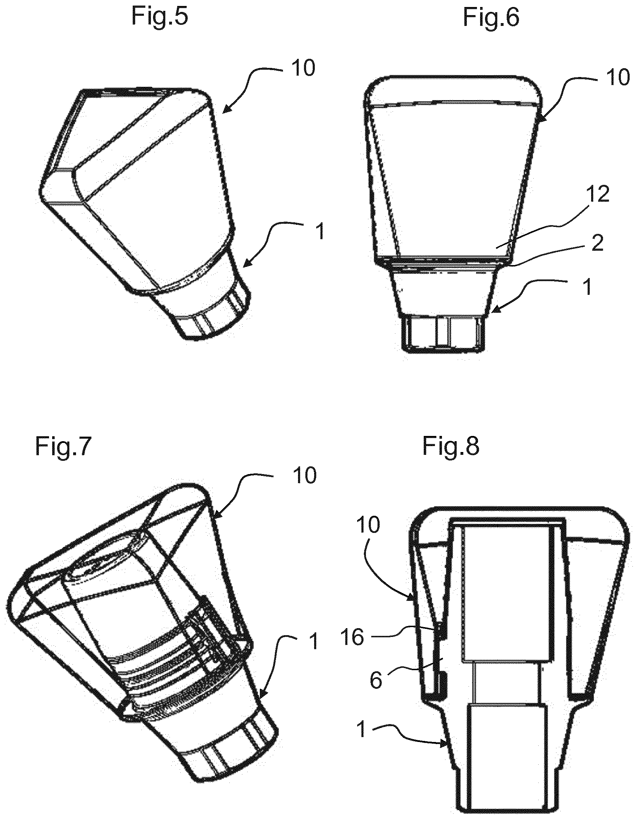

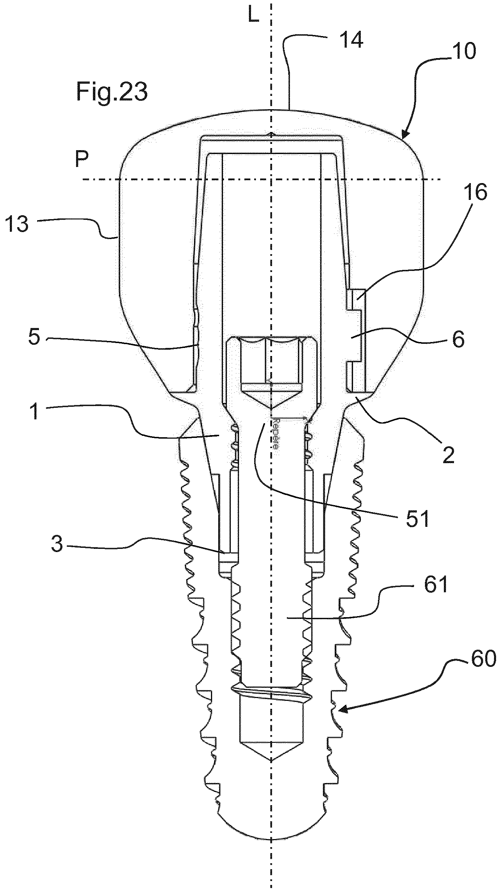

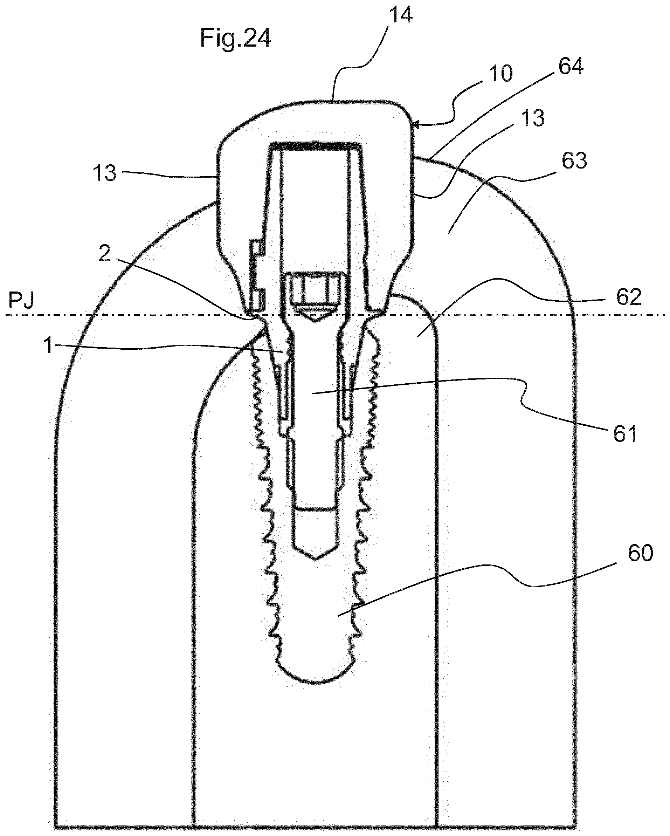

Suite à la fixation d'un implant 60 lors d'un procédé de restauration dentaire, une embase de pilier 1 est fixée sur l'implant 60 par son dispositif de connexion 3, et par l'intermédiaire d'une vis 61, puis un capuchon 10 est fixé sur la seconde partie coronaire de l'embase de pilier. Cet assemblage est illustré par les figures 23 et 24. Comme illustré notamment par les figures 3 et 7, le capuchon 10 comprend une ouverture 11 pour former une partie de liaison et un volume intérieur creux, destiné à l'insertion de la seconde partie coronaire de l'embase de pilier. Le pourtour de cette ouverture 11 comprend une surface 12 destinée à venir en appui sur une surface plane correspondante de la collerette 2 de l'embase de pilier, après clippage du capuchon 10 sur l'embase de pilier, pour atteindre l'ensemble assemblé représenté par les figures 5 à 8 et 19a à 19d.

Il existe autant d'embases de pilier différentes que de dispositifs de connexion différents des implants existants, afin de pouvoir disposer, pour chaque implant existant, d'une embase de pilier dotée d'un dispositif de connexion 3 qui lui est adapté. L'avantage de cette approche est qu'elle permet de conserver toute la seconde partie coronaire des embases de pilier, à partir de la collerette 2, inchangée, quel que soit l'implant correspondant à l'embase de pilier. Naturellement, il est aussi possible de prévoir des secondes parties coronaires différentes pour des embases de pilier différentes, selon leur utilisation envisagée. Dans tous les cas, la seconde partie coronaire de l'embase de pilier est indépendante de l'implant, décorrélée du dispositif de fixation de l'implant.

Le capuchon 10 a pour fonction de venir se loger au sein de la gencive incisée, après fixation d'un implant, par fixation, de préférence amovible, sur une embase de pilier connectée à l'implant. La configuration finale est représentée sur la figure 24. Dans cette configuration, l'implant 60 est solidarisé à la partie osseuse 62, l'embase de pilier 1 est fixée sur l'implant 60, de sorte que sa collerette 2 se trouve positionnée au niveau de la frontière entre la partie osseuse 62 et la gencive 63. Le capuchon 10 recouvre l'embase de pilier 1 jusqu'à la collerette 2, de sorte que la gencive 63 est presque exclusivement en contact avec le capuchon 10. L'ensemble formé par l'assemblage d'un capuchon sur une embase de piler correspond ainsi à un ensemble de cicatrisation, qui participe temporairement au procédé de restauration, permettant la cicatrisation et la fabrication sans heurt de la prothèse définitive, comme cela sera détaillé par la suite.

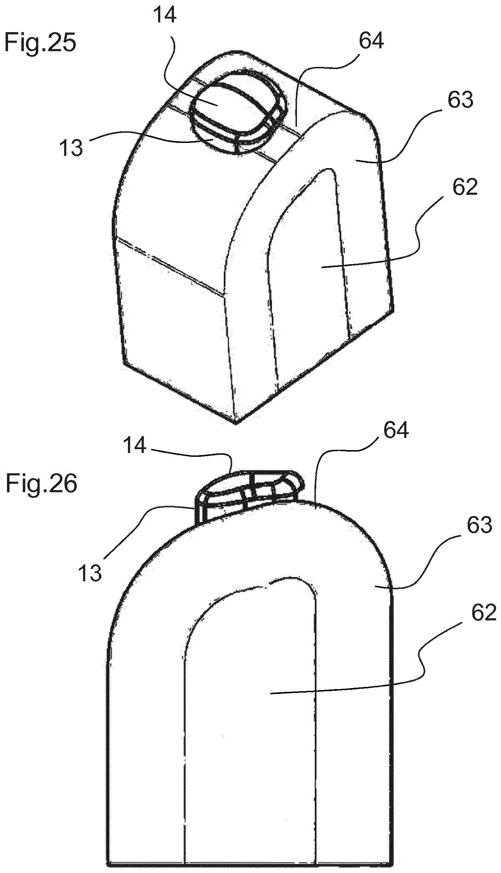

La gencive 63 se cicatrise donc autour de la surface latérale 13 du capuchon 10. Pour cela, cette surface latérale 13 est choisie pour correspondre au mieux au milieu buccal du patient. La surface terminale 14 opposée à l'ouverture 11 du capuchon est destinée à rester visible au-dessus de la surface gingivale 64 de la gencive 63, puisque la gencive reste intégralement en contact avec la surface latérale 13 du capuchon. En remarque, la partie haute de la surface latérale 13 et la surface terminale 14 forment donc une surface émergente du capuchon. Cette surface émergente est notamment illustrée par les figures 25 et 26. Pour cela, des capuchons de hauteur différente peuvent être prévus pour s'adapter à différentes configurations de la géométrie buccale. A titre d'exemples de réalisation, trois hauteurs différentes standard permettent une bonne adaptation à toutes les situations. Cette hauteur est avantageusement comprise entre 3 et 7 mm. Du fait de l'utilisation d'une embase de pilier qui joue le rôle d'interface, un même capuchon 10 est ainsi universellement adapté à tous les implants existants.

Selon le mode de réalisation de l'invention, la forme du capuchon est spécifiquement choisie pour favoriser la cicatrisation de la gencive, selon une forme anatomique correspondant au mieux à la dent à remplacer et par conséquent aussi à la future prothèse destinée à occuper cet espace buccal. Cette forme est notamment caractérisée par la section plane de sa surface latérale 13, cette section étant une section transverse par un plan perpendiculaire P à la surface latérale 13, représenté sur la figure 23, et sensiblement parallèle à la surface terminale 14. En remarque, cette section est sensiblement reproduite par la forme de la surface terminale 14, ou plus précisément par la projection de cette surface terminale 14 sur un tel plan perpendiculaire, c'est-à-dire sensiblement parallèle à la surface gingivale 64.

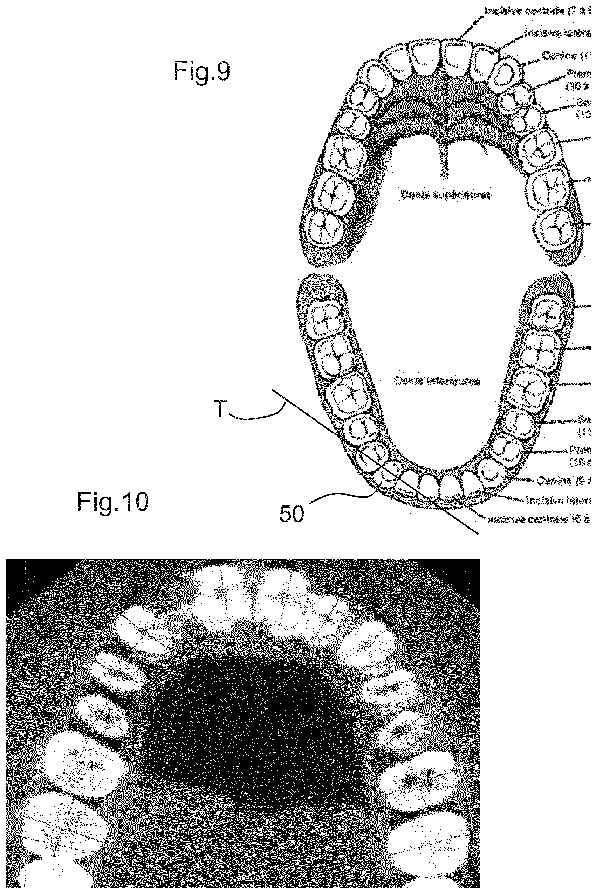

Pour comprendre l'approche retenue, la figure 9 illustre une vue de dessus des dents supérieures et inférieures et la figure 10 illustre une vue en coupe au niveau du plan justogingival PJ d'une dentition, représenté sur la figure 24, au niveau de la racine des émergences des dents. Ces figures montrent que les dents possèdent des sections de formes différentes, que l'on peut simplifier par des formes rectangulaires et/ou carrées et/ou triangulaires, mais plus précisément trapézoïdales.

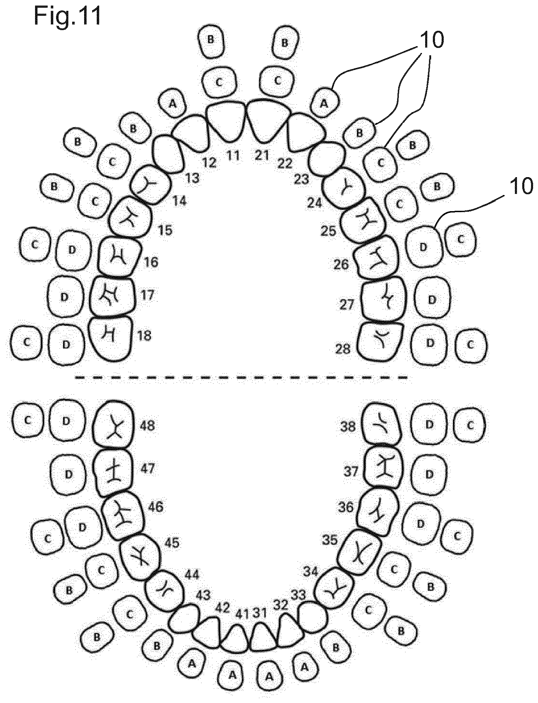

Selon le mode de réalisation choisi, une série de capuchons 10 de formes différentes va permettre de reproduire au mieux ces différentes formes. La figure 11 représente ainsi une vue de dessus des sections de toutes les dents et une vue de dessus de capuchons 10 associés à chaque dent. Les formes des différentes séries de dents, numérotées de 11 à 18, de 21 à 28, de 31 à 38 et de 41 à 48 sur cette figure, ces numéros ne devant pas être confondus avec les références numériques utilisées par ailleurs sur les autres figures pour désigner les caractéristiques de l'invention, sont toutes approchées par l'intermédiaire de quatre capuchons 10 différents, référencés A à D. Pour certaines dents, voire toutes les dents, plusieurs capuchons, parmi les capuchons A à D, apparaissent adaptés.

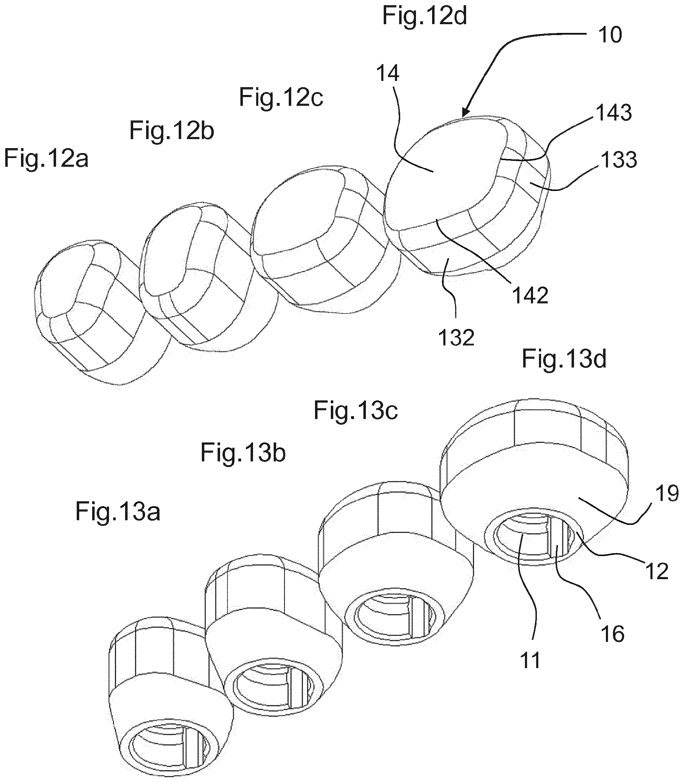

Dans l'exemple de réalisation choisi et illustré par la figure 11, les capuchons A sont adaptés pour traiter la restauration des incisives latérales supérieures et toutes les incisives inférieures. Les capuchons B sont adaptés pour la restauration des canines et des prémolaires, les capuchons C sont adaptés pour la restauration des molaires intermédiaires puis les capuchons D sont adaptés pour la restauration des molaires les plus grosses. Ces capuchons vont maintenant être décrits plus en détail. Le capuchon A est particulièrement illustré par les figures 12a à 16a, le capuchon B par les figures 12b à 16b, le capuchon C par les figures 12c à 16c et le capuchon D par les figures 12d à 16d. Pour ne pas alourdir les figures, les références numériques ne sont pas reproduites sur tous les capuchons de ces figures ; toutefois, tous ces capuchons possèdent les mêmes caractéristiques, qui vont être décrites.

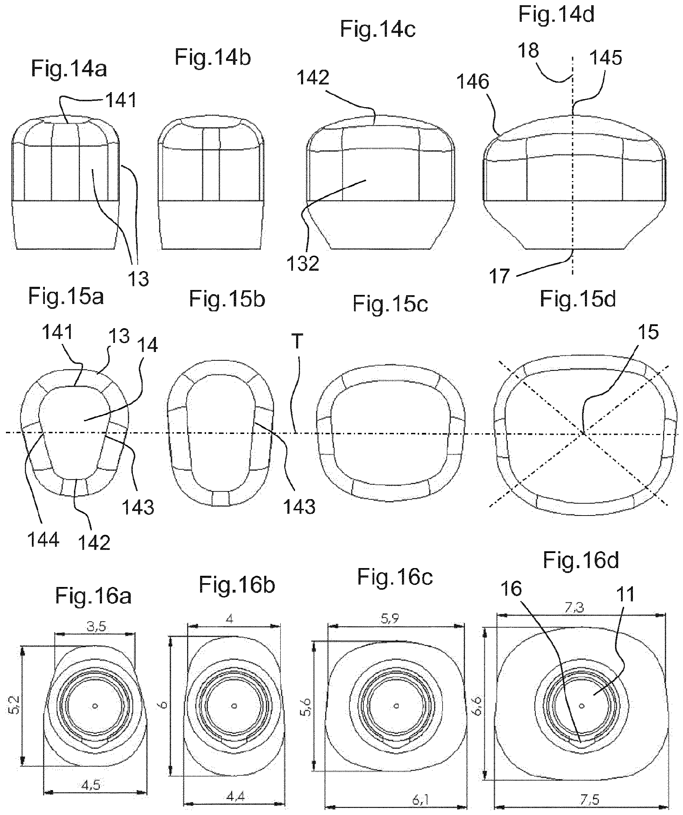

Comme cela ressort des figures 12 et 15, les surfaces terminales 14 de ces capuchons 10 (A à D), destinées à un positionnement au-dessus de l'émergence gingivale, sont sensiblement planes et destinées à un positionnement parallèle à un plan horizontal (parallèle au plan justogingival PJ, entre 1 et 2 mm inclus au-dessus de ce plan) correspondant au plan de coupe de la figure 9. Elles sont toutefois légèrement bombées, présentant une partie centrale 145, plus particulièrement visible sur les figures 14a à 14d, destinées à s'élever plus au-delà de la gencive que ses parties périphériques 146.

La section transverse du capuchon, par un plan P perpendiculaire à sa surface latérale 13, comme explicité précédemment, qui donne la forme finale à la gencive après cicatrisation, est sensiblement reproduite par la surface terminale 14 du capuchon, qui vient dans son prolongement. Les sections de tous les capuchons présentent toutes une forme sensiblement trapézoïdale. Elles comprennent un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. De plus, en considérant le centre 17 de l'ouverture 11 sensiblement circulaire de la surface opposée du capuchon 10, il est possible de définir un axe 18 central du capuchon, passant par les deux points centraux 15, 17. Cet axe 18 du capuchon 10 est perpendiculaire à la surface terminale 14. L'ensemble de l'architecture de l'embase de pilier et d'un capuchon 10 associés est conçu pour que l'axe 18 du capuchon corresponde à l'axe longitudinal L de l'embase de pilier, et à l'axe de l'implant.

Les quatre types de capuchons 10, A, B, C et D, diffèrent donc notamment par la forme trapézoïdale de la section transverse de leurs surfaces latérales 13. Le trapèze du plus petit capuchon A se rapproche d'un triangle, car son petit côté 142 est très réduit. Le trapèze du capuchon B se rapproche d'un rectangle, dont le grand côté va de l'extérieur de la bouche vers l'intérieur, et correspond aux côtés 143, 144. Au contraire, les trapèzes des capuchons C et D se rapprochent d'un rectangle, voire d'un carré, dont le grand côté est dans le sens inverse, et correspond aux côtés 141, 142, qui sont de longueur proches mais légèrement différentes. A titre d'exemples de réalisation, les figures 16a à 16d donnent des ordres de grandeur des dimensions de ces capuchons, en millimètres.

Naturellement, cette forme sensiblement trapézoïdale retenue présente des angles arrondis et des côtés courbés, pour garantir de ne pas heurter la gencive. De plus, la surface terminale 14 de chaque capuchon présente une surface continue, sans reliefs, et/ou sans partie creuse, et/ou sans gorge, et/ou sans arrête, et/ou sans aspérité. Cette surface est convexe. Notamment, elle ne présente pas de forme creuse, et naturellement pas d'ouverture débouchante, comme cela serait nécessaire si il était choisi de fixer le capuchon par une vis de fixation. Cette géométrie sans aspérité est favorable à l'hygiène buccale, empêche par exemple l'accumulation d'aliments et le dépôt de la plaque dentaire.

En variante, la série de capuchons pourrait comprendre un nombre différents de géométries différentes, par exemple au moins trois, voire au moins deux. Dans une variante de réalisation simplifiée, une seule forme de capuchon pourrait convenir pour toutes les dents.

Selon d'autres variantes de réalisation, la section transverse d'un capuchon au niveau de sa surface latérale 13 pourrait s'approcher de tout polygone, comme un polygone à trois, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Avantageusement, cette forme comprend au moins un centre ou point parfaitement défini géométriquement pour définir un centre 15, voire un éventuel axe 18 du capuchon, ce centre étant avantageusement, mais non obligatoirement, dans l'alignement de l'axe longitudinal L de l'embase de pilier.

Selon le mode de réalisation, la géométrie de la surface émergente visible du capuchon du côté de l'intérieur de la bouche diffère de la géométrie du côté de l'extérieur, pour tenir compte de la courbure de la gencive. Cette forme de la surface émergente du capuchon est donc asymétrique par rapport à un plan médian contenant la tangente T à la gencive, représentée sur les figures 15a à 15d, et plus précisément sur la figure 9 en considérant une dent 50 à restaurer. Ce plan médian, dit plan tangent T, est parallèle à la tangente T à la gencive, perpendiculaire au plan justogingival PJ, passe au milieu 15 d'un capuchon.

Ainsi, une forme circulaire pour la section du capuchon, associée par exemple à un capuchon cylindrique, est inadaptée. Plus généralement, toute courbe plane présentant une symétrie autour d'un point ou d'un axe est peu ou pas adaptée pour la section susmentionnée du capuchon, car d'une part, elle ne serait pas adaptée à l'anatomie de la bouche et, d'autre part, son orientation circulaire autour de cet axe ne serait plus identifiable. Pour les mêmes raisons, la surface émergente et visible du capuchon n'est donc pas symétrique par rapport à au moins un, ou même plusieurs plans parallèles à son axe 18, et/ou comprenant cet axe 18. Elle n'est pas symétrique par rapport à au moins un, ou plusieurs plans perpendiculaires à la surface émergente et passant par son centre 15, que nous appelons plans médians perpendiculaires. Dans l'exemple représenté, seul le plan perpendiculaire au plan tangent T mentionné, passant au milieu des deux côtés 141, 142, forme un plan de symétrie. Les remarques précédentes s'appliquent à la surface émergente du capuchon, ou à sa section transverse par un plan de coupe P défini précédemment, ou à la projection de sa surface émergente sur un tel plan P. Le plan médian perpendiculaire est alors tout plan perpendiculaire au plan P et passant au centre de la géométrie considérée du capuchon. Alternativement, un plan médian perpendiculaire peut se définir comme tout plan contenant l'axe 18 du capuchon. Cette surface émergente d'un capuchon peut finalement prendre toute forme tridimensionnelle identifiable, permettant de reconnaître le capuchon utilisé et éventuellement de connaître son orientation, pour remplir une seconde fonction qui sera détaillée par la suite.

Les surfaces terminales 14 des capuchons sont prolongées à partir de leur périphérie 146 par la surface latérale 13 autour de laquelle se cicatrise la gencive, et qui donne ainsi la forme de gencive adaptée à la future prothèse. Cette surface latérale 13 présente plusieurs surfaces 131, 132, 133, 134, sensiblement planes, éventuellement légèrement courbées, s'étendant selon une direction sensiblement parallèle à l'axe 18 du capuchon et/ou parallèlement à l'axe longitudinal L de l'embase de pilier, en prolongeant respectivement les différents côtés 141, 142, 143, 144 de la surface terminale 14 du capuchon. Les interfaces entre la surface terminale 14 et ces différentes parties de la surface latérale 13 sont réalisées par des surfaces arrondis, sans aspérité, notamment convexes.

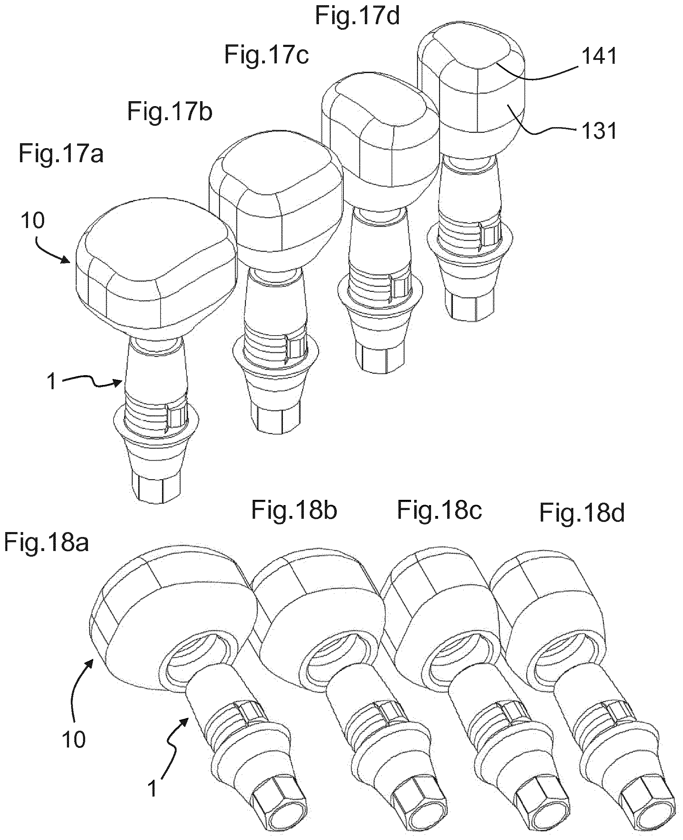

Enfin, la surface latérale 13 des capuchons se termine par une surface 19 sensiblement tronconique, jusqu'à l'ouverture 11 sensiblement circulaire, mentionnée précédemment. Cette ouverture 11 débouche sur une partie creuse interne au capuchon 10, qui permet le logement de la seconde partie coronaire de l'embase de pilier. Cette partie creuse est dotée d'un dispositif de fixation complémentaire à celui 4 de l'embase de pilier. Dans le mode de réalisation, il s'agit de bourrelets prévus pour se clipper sur les gorges 5 de l'embase de pilier. Enfin, une gorge sensiblement longitudinale 16 est agencée dans cette partie creuse du capuchon, pour coopérer avec l'ergot, formant ainsi une liaison bloquée en rotation, et parfaitement indexée, l'orientation du capuchon étant unique et parfaitement imposée. Les figures 3 à 8 et 17a à 17d, 18a à 18d et 19a à 19d, montrent particulièrement un ensemble de cicatrisation selon l'invention, formé par l'assemblage d'un capuchon 10 avec une embase de pilier 1.

Le capuchon peut se trouver en matériau plastique, compatible avec une utilisation médicale, et de couleur rose, blanche ou crème. En variante, il peut être en métal, par exemple en titane, ou peut être en zircone.

L'utilisation des capuchons de cicatrisation permet donc de favoriser une cicatrisation idéale de la gencive dans un procédé de restauration dentaire, comme cela a été discuté, du fait de sa géométrie conçue en phase avec l'anatomie buccale. La solution a été décrite avec un capuchon de cicatrisation amovible et distinct d'une embase dans le mode de réalisation précédent. Le capuchon peut donc se présenter sous d'autres formes et sera dénommé plus généralement élément de cicatrisation 10 par la suite. En remarque, cet élément de cicatrisation peut en variante être totalement sous-gingival et invisible, puis rendu visible par intervention sur la gencive pour mettre en œuvre le reste du procédé de reconnaissance qui est décrit ci-après. Dans ce cas, la partie extrême du capuchon sera toujours appelée abusivement partie émergente. Le capuchon sera ainsi plus généralement appelé « élément de cicatrisation » par la suite.

Outre les avantages décrits précédemment, l'élément de cicatrisation permet la mise en œuvre d'un procédé de restauration avantageux, comprenant un procédé de fabrication d'une prothèse dentaire et d'un pilier définitifs, avec une traumatisation minimale de la gencive. En effet, il est possible d'obtenir une empreinte numérique ou physique de la zone à restaurer sans retirer l'élément de cicatrisation en bouche, donc sans heurter la gencive. Ainsi, en plus de sa première fonction de cicatrisation, détaillée précédemment, le capuchon remplit une seconde fonction lors du procédé de restauration, en permettant la définition avantageuse de la forme du pilier de restauration et/ou de la prothèse avant son retrait. Cette fonction est complémentaire de sa première fonction de cicatrisation puisqu'elle permet de ne pas traumatiser la gencive après sa cicatrisation selon une forme anatomique avantageuse choisie.

Pour cela, en fin de la phase de cicatrisation du procédé de restauration dentaire, un praticien peut prendre une empreinte numérique de la bouche du patient, sans retirer l'élément de cicatrisation (le capuchon). Les données de numérisation, obtenues par tout appareil comme un scanner buccal par exemple, sont transmises automatiquement à un ordinateur doté d'un logiciel de restauration dentaire. Ce logiciel est doté d'une interface homme machine, par laquelle un opérateur peut indiquer le modèle de capuchon qu'il a utilisé, ou plus généralement la référence de l'élément de cicatrisation, et éventuellement de l'implant et/ou de l'embase de pilier utilisé.

A partir des données de numérisation, un logiciel détermine automatiquement l'axe de l'élément de cicatrisation, par construction géométrique, par exemple à partir de l'identification du centre 15 du capuchon et de la direction perpendiculaire à la surface terminale 14 passant par ce centre 15. Par cette construction, il peut ainsi déterminer automatiquement l'axe de l'implant, sans avoir à le visualiser directement. En effet, l'élément de cicatrisation est avantageusement aligné avec l'implant, son axe étant ainsi confondu avec celui de l'implant.

Ensuite, comme la géométrie de l'élément de cicatrisation correspond à un positionnement unique autour de son axe 18, ou autour de l'axe longitudinal L de l'embase de pilier, pour respecter le milieu buccal et notamment la géométrie de la gencive vers l'intérieur de la bouche (côté lingual) qui diffère de sa géométrie vers l'extérieur (côté vestibulaire), il est possible de déduire de son orientation l'orientation de l'axe du dispositif de connexion avec l'implant, par exemple le dispositif de connexion 3 de l'embase de pilier avec l'implant : cela permet d'en déduire automatiquement le positionnement du dispositif de connexion de l'implant, sans avoir à le visualiser directement. A titre d'exemple, il est possible d'imposer lors de cette construction que l'un des côtés parallèles de la forme trapézoïdale de la surface 14 visible du capuchon soit parallèle à un côté de l'hexagone du dispositif de fixation d'un implant.

Enfin, dans le cas où des éléments de cicatrisation de hauteur différente existent, il reste à déterminer cette hauteur, pour positionner parfaitement l'implant invisible. Une première approche peut consister à former des éléments de cicatrisation de couleur différente pour des hauteurs différentes. Une seconde approche consiste à disposer tout indicateur sur la surface 14 visible de l'élément de cicatrisation pour indiquer cette hauteur, cet indicateur pouvant être composé de chiffres et/ou de lettres et/ou de tout symbole et/ou de couleurs et/ou de marquages laser et/ou d'un ou plusieurs codes-barres et/ou de codes datamatrix et/ou de tout code d'identification. Une troisième approche peut consister à former des éléments de cicatrisation présentant une surface 14 visible différente selon leur hauteur. A titre d'exemple, les capuchons A, B, C, D pourraient conserver la même forme mais avec des dimensions légèrement plus grandes pour des hauteurs plus importantes, permettant ainsi de les différencier automatiquement puis de déterminer leur hauteur.

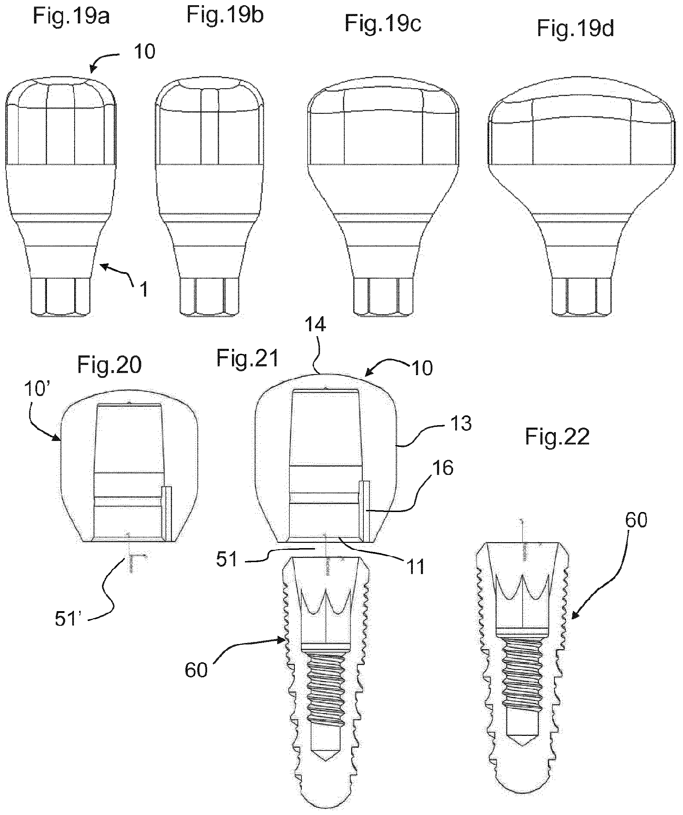

En variante ou complément de réalisation, un opérateur saisit par une interface homme machine la référence de l'élément de cicatrisation, ce qui permet au logiciel de retrouver les caractéristiques de cet élément de cicatrisation comme sa hauteur, son centre et/ou axe, dans une bibliothèque présente sous forme de base de données stockée dans une mémoire électronique qu'il peut consulter. La figure 20 illustre à titre d'exemple un capuchon 10' virtuel mémorisé dans la bibliothèque associée au logiciel de restauration. Un repère dans l'espace 51' est associé au capuchon, permettant son positionnement dans l'espace. En variante, le logiciel peut reconnaître automatiquement l'élément de cicatrisation à partir de ses caractéristiques géométriques, sans saisie manuelle de sa référence. Un opérateur peut assister un logiciel au bon positionnement du repère 51 du capuchon réel, c'est-à-dire à la reconnaissance de son positionnement réel, en saisissant sur une image obtenue par l'étape de numérisation mentionnée ci-dessus et présentée à l'opérateur sur un écran d'une interface homme machine un ou plusieurs points de la surface émergente.

A partir des données numérisées, et éventuellement de l'aide du ou des points de la surface de l'élément de cicatrisation manuellement renseignés par un opérateur, le logiciel sait donc associer l'élément de cicatrisation virtuel issu de sa bibliothèque à l'environnement buccal numérisé, en remplacement de l'élément de cicatrisation réel, pour obtenir une reproduction numérique plus parfaite. En remarque, la forme de l'élément de cicatrisation réel permet de déterminer son orientation, notamment du fait de sa forme asymétrique, comme mentionné précédemment. Comme représenté sur la figure 21, le repère réel 51 du capuchon 10 réel est ainsi déterminé automatiquement par le logiciel. Il est possible de positionner parfaitement l'élément de cicatrisation virtuel sur l'empreinte numérique, automatiquement ou éventuellement par l'intermédiaire d'une intervention d'un opérateur sur une interface homme machine permettant de visualiser l'empreinte buccale et l'élément de cicatrisation. Ce positionnement parfait de l'élément de cicatrisation virtuel permet d'en déduire toutes les géométries avoisinantes, à partir des références connues mémorisées dans la base de données associée à l'élément de cicatrisation précis considéré, dont la position de l'implant 60 et la géométrie de la gencive cicatrisée sans présence du capuchon 10 ni de l'embase de pilier, comme représenté par la figure 22.

Lorsque le logiciel de restauration a repositionné avec exactitude le positionnement de l'implant caché, il déduit de ces connaissances la géométrie finale du pilier de restauration à fabriquer, qui doit être fixé à l'implant et occuper tout le volume gingival défini par l'élément de cicatrisation, puis la géométrie de la prothèse dentaire destinée à se fixer sur ce pilier, de manière connue.

En remarque, ce procédé de restauration peut se faire totalement numériquement, donc virtuellement, ou comprendre des phases de construction d'une maquette en plastique ou plâtre. Dans ce dernier cas, une empreinte physique, par exemple en silicone, peut être réalisée, un plâtre peut être coulé dans l'empreinte pour créer le maître modèle, c'est à dire une réplique de l'arcade dentaire à restaurer, qui est ensuite scannée en laboratoire pour reconstruire une image numérique.

Comme cela ressort de la description ci-dessus, la dernière phase du procédé de restauration repose donc sur un dispositif de restauration, qui comprend une unité centrale de traitement et de commande, comprenant ici au moins un microprocesseur, lié à une mémoire électronique, sur lequel est exécuté un logiciel permettant la mise en œuvre de tout ou partie des étapes du procédé de restauration décrit ci-dessus. Cette unité centrale est liée par un dispositif de communication à un module d'obtention de données numériques représentant tout ou partie d'une dentition d'un patient, qui peut consister en un appareil comme un scanner buccal. Elle est aussi liée à une interface homme machine, comprenant par exemple un écran et/ou un clavier, pour permettre les échanges avec un opérateur, comme explicité ci-dessus. L'unité centrale réalise ensuite tous les traitements nécessaires, calculs et autres, par un moyen logiciel. Elle est enfin apte à générer et transmettre des commandes de fabrication à un dispositif de fabrication d'un pilier de restauration et/ou de prothèse. Elle peut de plus être liée par un second dispositif de communication à un dispositif de fabrication comme une machine outil.

## Revendications

1. Ensemble de cicatrisation apte à une connexion avec un implant dentaire lors d'une phase de cicatrisation d'un procédé de restauration dentaire, comprenant un élément de cicatrisation (10) destiné à être entouré au moins partiellement par une gencive (63) et une embase de pilier (1) destinée à une fixation dans un implant (60), l'élément de cicatrisation (10) et l'embase de pilier (1) formant deux éléments distincts et assemblés de manière amovible, tel que
- l'élément de cicatrisation comprend une surface latérale (13) destinée à une intégration au sein d'une gencive pour mettre en forme la gencive lors de sa cicatrisation, et une surface terminale (14), une partie de la surface latérale (13) et de la surface terminale (14) formant une surface émergente, destinée à rester hors de la gencive, qui est asymétrique par rapport à au moins un plan médian perpendiculaire à la surface émergente et passant par le centre de la surface émergente ou comprenant un axe (18) central de l'élément de cicatrisation, et une section transverse à la surface latérale (13) de l'élément de cicatrisation ou une projection sur un plan parallèle de la surface émergente de l'élément de cicatrisation présentant une forme sensiblement trapézoïdale ou une forme sensiblement polygonale, ou triangulaire, ou carrée, ou rectangulaire, ou ovoïde, ou une forme sensiblement polygonale avec des angles arrondis, et une partie destinée à un positionnement orienté vers l'extérieur de la bouche de plus grande dimension qu'une partie destinée à un positionnement orienté vers l'intérieur, et l'élément de cicatrisation comprend un élément anti-rotationnel, notamment une gorge, l'élément de cicatrisation étant agencé autour d'un axe (18) central aligné avec un axe longitudinal (L) de l'embase de pilier (1) et tel que
- l'embase de pilier comprend un dispositif de connexion (3) avec un implant et une partie coronaire comprenant un dispositif de connexion (4) avec ledit élément de cicatrisation, et comprend ledit axe longitudinal (L) sur toute sa longueur apte à un alignement avec l'axe d'un implant (60), lesdits deux dispositifs de connexion étant agencés autour d'un axe aligné et confondu avec l'axe longitudinal (L) de l'embase de pilier (1), l'embase de pilier (1) comprenant un élément anti-rotationnel (6), notamment un ergot, pour garantir une fixation de l'élément de cicatrisation (10) à orientation unique, sans rotation autour de l'embase de pilier (1).

2. Ensemble de cicatrisation selon la revendication 1, **caractérisé en ce que** l'embase de pilier (1) présente une symétrie ou une quasi-symétrie autour de son axe longitudinal (L).

3. Ensemble de cicatrisation selon l'une des revendications précédentes, **caractérisé en ce que** la surface terminale (14) ou la surface émergente de l'élément de cicatrisation (10) comprend un côté parallèle à une surface plane du dispositif de connexion (3) de l'embase de pilier (1), pour pouvoir déduire de son orientation l'orientation du dispositif de connexion (3).

4. Ensemble de cicatrisation selon l'une des revendications précédentes, **caractérisé en ce que** l'élément de cicatrisation (10) est clippé sur l'embase de pilier (1).

5. Ensemble de cicatrisation selon l'une des revendications précédentes, **caractérisé en ce que** les parties de la surface émergente de l'élément de cicatrisation (10) destinées respectivement à un positionnement orienté vers l'intérieur et vers l'extérieur de la bouche présentent une forme différente.

6. Ensemble de cicatrisation selon l'une des revendications précédentes, **caractérisé en ce que** la surface terminale (14) et/ou la surface émergente de l'élément de cicatrisation (10) présente :
- une surface non plane, courbée ; et/ou
- une surface convexe ; et/ou
- une surface sans aspérité ; et/ou
- une surface sans ouverture débouchante.

7. Ensemble de cicatrisation selon l'une des revendications précédentes, **caractérisé en ce que** la surface terminale (14) ou la surface émergente de l'élément de cicatrisation (10) comprend un indicateur pour indiquer sa hauteur ou **en ce que** l'élément de cicatrisation (10) comprend une couleur pour indiquer sa hauteur ou un marquages laser et/ou un ou plusieurs codes-barres et/ou des codes datamatrix pour indiquer sa hauteur.

8. Série d'ensembles de cicatrisation selon l'une des revendications précédentes, **caractérisée en ce qu'**elle comprend au moins deux éléments de cicatrisation (10) présentant des formes différentes ou **en ce qu'**elle comprend au moins trois éléments de cicatrisation (10) de formes différentes, aptes à une fixation sur une embase de pilier (1) de forme identique.

9. Procédé de fabrication d'un pilier de restauration dentaire, destiné à être fixé sur un implant dentaire sur une première extrémité et à recevoir une prothèse sur sa seconde extrémité, le procédé comprenant les étapes suivantes :
- prise d'une empreinte manuelle ou numérique de l'espace buccal comprenant un élément de cicatrisation d'un ensemble de cicatrisation selon l'une des revendications 1 à 7 fixé sur l'implant ;
- détection automatique du positionnement de l'implant par l'identification de :
- l'axe de l'implant correspondant à un axe (18) de l'élément de cicatrisation identifié par la géométrie de sa surface émergente hors de la gencive (63) ou à partir d'une association à un élément de cicatrisation mémorisé stocké dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- l'orientation de l'implant à partir de l'orientation de la surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- la hauteur de l'implant par détermination de la hauteur de l'élément de cicatrisation, à partir d'une couleur ou d'un indicateur de sa surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine.

10. Dispositif de restauration comprenant une unité centrale de traitement et de commande, comprenant au moins un microprocesseur, lié à une mémoire électronique, sur lequel est exécuté un logiciel configuré pour la mise en œuvre de tout ou partie des étapes du procédé de fabrication d'un pilier de restauration dentaire selon la revendication précédente, cette unité centrale étant liée par un dispositif de communication à un module d'obtention de données numériques comme un scanner buccal, et étant liée à une interface homme machine, comprenant notamment un écran et/ou un clavier, pour permettre les échanges avec un opérateur, l'unité centrale étant apte à générer et transmettre des commandes de fabrication à un dispositif de fabrication d'un pilier de restauration et/ou de prothèse.

## Patentansprüche

1. Wundheilungsanordnung für eine Verbindung mit einem Zahnimplantat bei einer Wundheilungsphase eines Dentalrestaurationsverfahrens, umfassend ein Wundheilungselement (10), das dazu bestimmt ist, mindestens teilweise von Zahnfleisch (63) umgeben zu sein, und einen Pfeilersockel (1), der für eine Fixierung in einem Implantat (60) bestimmt ist, wobei das Wundheilungselement (10) und der Pfeilersockel (1) zwei separate Elemente bilden, die entfernbar zusammengebaut sind, so dass
- das Wundheilungselement eine Seitenfläche (13), die zu einer Integrierung im Zahnfleisch bestimmt ist, um das Zahnfleisch während seiner Wundheilung zu formen, und eine Endfläche (14) umfasst, wobei ein Teil der Seitenfläche (13) und der Endfläche (14) eine herausragende Fläche bildet, die dazu bestimmt ist, außerhalb des Zahnfleischs zu bleiben, und die bezüglich mindestens einer Mittelebene asymmetrisch ist, die senkrecht zu der herausragenden Fläche verläuft und durch die Mitte der herausragenden Fläche geht oder eine mittlere Achse (18) des Wundheilungselements umfasst, und wobei ein Schnitt quer zu der Seitenfläche (13) des Wundheilungselements oder eine Projektion auf eine parallele Ebene der herausragenden Fläche des Wundheilungselements eine im Wesentlichen trapezförmige Form oder eine im Wesentlichen polygonale oder dreieckige oder quadratische oder rechteckige oder eiförmige Form oder eine im Wesentlichen polygonale Form mit abgerundeten Ecken hat sowie einen Teil, der für eine zur Außenseite des Mundes ausgerichtete Positionierung bestimmt ist, mit größerer Abmessung als ein Teil, der für eine zur Innenseite ausgerichtete Positionierung bestimmt ist, und das Wundheilungselement ein Verdrehsicherungselement, insbesondere eine Nut, umfasst, wobei das Wundheilungselement um eine mittlere Achse (18) angeordnet ist, die auf eine Längsachse (L) des Pfeilersockels (1) ausgerichtet ist, und so, dass
- der Pfeilersockel eine Vorrichtung (3) zur Verbindung mit einem Implantat und einen Kronenteil umfasst, der eine Vorrichtung (4) zur Verbindung mit dem Wundheilungselement umfasst, sowie die Längsachse (L) über seine gesamte Länge für eine Ausrichtung auf die Achse eines Implantats (60) umfasst, wobei die beiden Verbindungsvorrichtungen um eine Achse angeordnet sind, die auf die Längsachse (L) des Pfeilersockels (1) ausgerichtet ist und mit dieser zusammenfällt, wobei der Pfeilersockel (1) ein Verdrehsicherungselement (6), insbesondere einen Bolzen, umfasst, um eine Fixierung des Wundheilungselements (10) in einer einzigen Ausrichtung ohne Drehung um den Pfeilersockel (1) zu gewährleisten.

2. Wundheilungsanordnung nach Anspruch 1, **dadurch gekennzeichnet, dass** der Pfeilersockel (1) um seine Längsachse (L) symmetrisch oder quasi-symmetrisch ist.

3. Wundheilungsanordnung nach einem der vorhergehenden Ansprüche, **dadurch gekennzeichnet, dass** die Endfläche (14) oder die herausragende Fläche des Wundheilungselements (10) eine zu einer ebenen Fläche der Verbindungsvorrichtung (3) des Pfeilersockels (1) parallele Seite umfasst, um aus ihrer Ausrichtung die Ausrichtung der Verbindungsvorrichtung (3) ableiten zu können.

4. Wundheilungsanordnung nach einem der vorhergehenden Ansprüche, **dadurch gekennzeichnet, dass** das Wundheilungselement (10) auf den Pfeilersockel (1) aufgeklippst wird.

5. Wundheilungsanordnung nach einem der vorhergehenden Ansprüche, **dadurch gekennzeichnet, dass** die Teile der herausragenden Fläche des Wundheilungselements (10), die jeweils für eine zum Inneren und zum Äußeren des Mundes ausgerichtete Positionierung bestimmt sind, eine unterschiedliche Form aufweisen.

6. Wundheilungsanordnung nach einem der vorhergehenden Ansprüche, **dadurch gekennzeichnet, dass** die Endfläche (14) und/oder die herausragende Fläche des Wundheilungselements (10) Folgendes aufweisen:
- eine nicht ebene, gekrümmte Fläche und/oder
- eine konvexe Fläche und/oder
- eine Fläche ohne Rauheit und/oder
- eine Fläche ohne Durchgangsöffnung.

7. Wundheilungsanordnung nach einem der vorhergehenden Ansprüche, **dadurch gekennzeichnet, dass** die Endfläche (14) oder die herausragende Fläche des Wundheilungselements (10) eine Anzeige zum Anzeigen ihrer Höhe umfasst oder dass das Wundheilungselement (10) eine Farbe zum Anzeigen seiner Höhe oder eine Lasermarkierung und/oder einen oder mehrere Strichcode und/oder Datamatrix-Code zum Anzeigen seiner Höhe umfasst.

8. Serie von Wundheilungsanordnungen nach einem der vorhergehenden Ansprüche, **dadurch gekennzeichnet, dass** sie mindestens zwei Wundheilungselemente (10) mit unterschiedlichen Formen umfasst oder dass sie mindestens drei Wundheilungselemente (10) mit unterschiedlichen Formen für eine Fixierung an einem Pfeilersockel (1) mit identischer Form umfasst.

9. Verfahren zur Herstellung eines Dentalrestaurationspfeilers, der dazu bestimmt ist, an einem ersten Ende auf einem Dentalimplantat fixiert zu werden und an seinem zweiten Ende eine Prothese aufzunehmen, wobei das Verfahren die folgenden Schritte umfasst:
- Anfertigen eines manuellen oder digitalen Abdrucks des Mundraums, umfassend ein Wundheilungselement einer Wundheilungsanordnung nach einem der Ansprüche 1 bis 7, das auf dem Implantat fixiert ist,
- automatisches Erfassen der Positionierung des Implantats durch Kennzeichnung:
- der Achse des Implantats, die einer Achse (18) des Wundheilungselements entspricht, die durch die Geometrie seiner aus dem Zahnfleisch (63) herausragenden Fläche oder ausgehend von einer Zuordnung zu einem in einer Datenbank gespeicherten Wundheilungselement, insbesondere ausgehend von seiner Bezugseingabe in einer Mensch-Maschine-Schnittstelle oder von seiner automatischen Erkennung anhand der Form seines herausragenden Teils und/oder anhand der manuellen Eingabe der Positionierung von mehreren Punkten der herausragenden Fläche in eine grafische Darstellung auf einer Mensch-Maschine-Schnittstelle identifiziert wird,
- der Ausrichtung des Implantats ausgehend von der Ausrichtung der aus dem Zahnfleisch herausragenden Fläche oder ausgehend von einer Zuordnung zu einem in einer Datenbank gespeicherten Wundheilungselement, insbesondere ausgehend von seiner Bezugseingabe in einer Mensch-Maschine-Schnittstelle oder von seiner automatischen Erkennung anhand der Form seines herausragenden Teils und/oder anhand der manuellen Eingabe der Positionierung von mehreren Punkten der herausragenden Fläche in eine grafische Darstellung auf einer Mensch-Maschine-Schnittstelle,
- der Höhe des Implantats durch Bestimmung der Höhe des Wundheilungselements ausgehend von einer Farbe oder einer Anzeige seiner aus dem Zahnfleisch herausragenden Fläche oder ausgehend von einer Zuordnung zu einem in einer Datenbank gespeicherten Wundheilungselement, insbesondere ausgehend von seiner Bezugseingabe in einer Mensch-Maschine-Schnittstelle oder von seiner automatischen Erkennung anhand der Form seines herausragenden Teils und/oder anhand der manuellen Eingabe der Positionierung von mehreren Punkten der herausragenden Fläche in eine grafische Darstellung auf einer Mensch-Maschine-Schnittstelle.

10. Restaurationsvorrichtung, umfassend eine zentrale Verarbeitungs- und Steuereinheit, die mindestens einen Mikroprozessor umfasst und mit einem elektronischen Speicher verbunden ist und in der eine Software ausgeführt wird, die zur Umsetzung aller oder eines Teils der Schritte des Verfahrens zur Herstellung eines Dentalrestaurationspfeilers nach dem vorhergehenden Anspruch ausgestaltet ist, wobei diese Zentraleinheit über eine Kommunikationsvorrichtung mit einem Modul zum Erhalt von digitalen Daten wie einem Mund-Scanner verbunden ist und mit einer Mensch-Maschine-Schnittstelle verbunden ist, die inbesondere einen Bildschirm und/oder eine Tastatur umfasst, um einen Austausch mit einer Betriebsperson zu gestatten, wobei die Zentraleinheit Herstellungsbefehle generieren und an eine Vorrichtung zur Herstellung eines Restaurationspfeilers und/oder einer Prothese übertragen kann.

## Claims

1. Healing set capable of a connection to a dental implant during a cicatrisation phase of a dental restoration process, comprising a cicatrisation element (10) designed to be surrounded at least partially by a gum (63) and a post base (1) designed to be fixed in an implant (60), the cicatrisation element (10) and the post base (1) forming two distinct elements and assembled in removable manner, such that
- the cicatrisation element has a lateral surface (13) designed to be integrated inside a gum in order to shape the gum during its cicatrisation, and a terminal surface (14), one portion of the lateral surface (13) and of the terminal surface (14) forming an emergent surface, designed to remain outside the gum, which is asymmetrical with respect to at least a median perpendicular plane to the emergent surface and passing through the centre of the emergent surface or comprising a central axis (18) of the cicatrisation element, and a cross section of the lateral surface (13) of the cicatrisation element or a projection onto a parallel plane of the emergent surface of the cicatrisation element having a substantially trapezoidal shape or a substantially polygonal, or triangular, or square, or rectangular, or ovoid shape, or a substantially polygonal shape with rounded corners, and a portion designed for a positioning oriented toward the outside of the mouth with larger dimension than a portion designed for a positioning oriented toward the inside, and the cicatrisation element comprises an anti-rotation element, especially a groove, the cicatrisation element being situated about a central axis (18) aligned with the longitudinal axis (L) of the post base (1), and such that
- the post base comprises a connection device (3) to an implant and a crown part comprising a connection device (4) to said cicatrisation element (10), and comprises said longitudinal axis (L) for its entire length, able to be aligned with the axis of an implant (60), said two connection devices being situated about an axis aligned with and coinciding with the longitudinal axis (L) of the post base (1), the post base (1) comprising an anti-rotation element (6), especially a tab, to guarantee a fixation of the cicatrisation element (10) in a unique orientation, with no rotation about the post base (1).

2. Healing set according to Claim 1, **characterized in that** the post base (1) has a symmetry or quasi-symmetry about its longitudinal axis (L).

3. Healing set according to one of the preceding claims, **characterized in that** the terminal surface (14) or the emergent surface of the cicatrisation element (10) comprises one side parallel to a planar surface of the connection device (3) of the post base (1), in order to deduce from its orientation the orientation of the connection device (3).

4. Healing set according to one of the preceding claims, **characterized in that** the cicatrisation element (10) is clipped onto the post base (1).

5. Healing set according to one of the preceding claims, **characterized in that** the parts of the emergent surface of the cicatrisation element (10) designed respectively for a positioning oriented to the inside and to the outside of the mouth have a different shape.

6. Healing set according to one of the preceding claims, **characterized in that** the terminal surface (14) and/or the emergent surface of the cicatrisation element (10) has/have:
- a nonplanar, curved surface; and/or
- a convex surface; and/or
- a surface with no roughness; and/or
- a surface with no through opening.

7. Healing set according to one of the preceding claims, **characterized in that** the terminal surface (14) or the emergent surface of the cicatrisation element (10) comprises an indicator to indicate its height or **in that** the cicatrisation element (10) has a colour to indicate its height or a laser marking and/or one or more bar codes and/or datamatrix codes to indicate its height.

8. Series of healing sets according to one of the preceding claims, **characterized in that** it comprises at least two cicatrisation elements (10) having different shapes, or **in that** it comprises at least three cicatrisation elements (10) of different shapes, able to be secured to a post base (1) of identical shape.

9. Method of fabrication of a dental restoration post, designed to be secured to a dental implant at a first end and to receive a denture at its second end, the method comprising the following steps:
- taking of a manual or digital impression of the buccal space, comprising a cicatrisation element according to one of claims 1 to 7 which is secured to the implant;
- automatic detection of the positioning of the implant by the identification of:
- the axis of the implant corresponding to an axis (18) of the cicatrisation element identified by the geometry of its emergent surface outside the gum (63) or based on an association with a cicatrisation element memorized and stored in a database, especially based on its reference entered through a man/machine interface or its automatic recognition by the shape of its emergent portion and/or by the manual entry of the positioning of a plurality of points of the emergent surface on a graphic representation on a man/machine interface;
- the orientation of the implant based on the orientation of the emergent surface outside of the gum or based on an association with a cicatrisation element memorized in a database, especially based on its reference entered through a man/machine interface or its automatic recognition by the shape of its emergent portion and/or by the manual entry of the positioning of a plurality of points of the emergent surface on a graphic representation on a man/machine interface;
- the height of the implant by determination of the height of the cicatrisation element, based on a colour or an indicator of its emergent surface outside of the gum or based on an association with a cicatrisation element memorized in a database, especially based on its reference entered through a man/machine interface or its automatic recognition by the shape of its emergent portion and/or by the manual entry of the positioning of a plurality of points of the emergent surface on a graphic representation on a man/machine interface.

10. Restoration device comprising a central processing and control unit, comprising at least a microprocessor, connected to an electronic memory, on which a software is executed configured for the implementation of some or all of the steps of the method of fabrication of a dental restoration post according to the preceding claim, this central unit being linked by a communication device to a module for obtaining digital data, such as a buccal scanner, and being linked to a man/machine interface, notably comprising a screen and/or a keyboard, to enable exchanges with an operator, the central unit being able to generate and transmit fabrication commands to a device for fabrication of a restoration post and/or a denture.
